# EUROPEAN PATENT APPLICATION

(11) **EP 1 688 321 A1**
(43) Date of publication of application: **09.08.2006**
(21) Application number: 06002280.3
(22) Date of filing: 03.02.2006
(51) Int. Cl.: B60R 21/16

(54) **Door integrated airbag with non-inflatable curtain**

(30) Priority: 04.02.2005 US 649567 P
(71) Applicant: TAKATA CORPORATION, Minato-ku, Tokyo 106-8510 (JP)
(72) Inventor: Jang, Jin Soo Takata Corp., Tokyo 106-8510 (JP); Nakamura, Kenji Takata Corp., Tokyo 106-8510 (JP); Watanabe, Kazuo Takata Corp., Tokyo 106-8510 (JP)
(74) Representative: Banzer, Hans-Jörg

(57) **Abstract**

An airbag apparatus (10) for protecting passengers in a car or the like. The airbag apparatus (10) includes an airbag (24) mounted in a side of a vehicle and a non-inflatable curtain (26) that is mounted in the side of the vehicle. The non-inflatable curtain (16) may be activated by inflation gas provided by an inflator (12) for the airbag (24). The non-inflatable curtain (26) may be arranged above the airbag (24) prior to deployment of the airbag (24). The airbag (24) may be positioned closer to an interior of a vehicle than the non-inflatable curtain (26).

## Description

The present invention relates to an airbag for protecting passengers in a car or the like, in particular to a head airbag mounted in a side of a vehicle and a non-inflatable curtain that is mounted in the side of the vehicle.

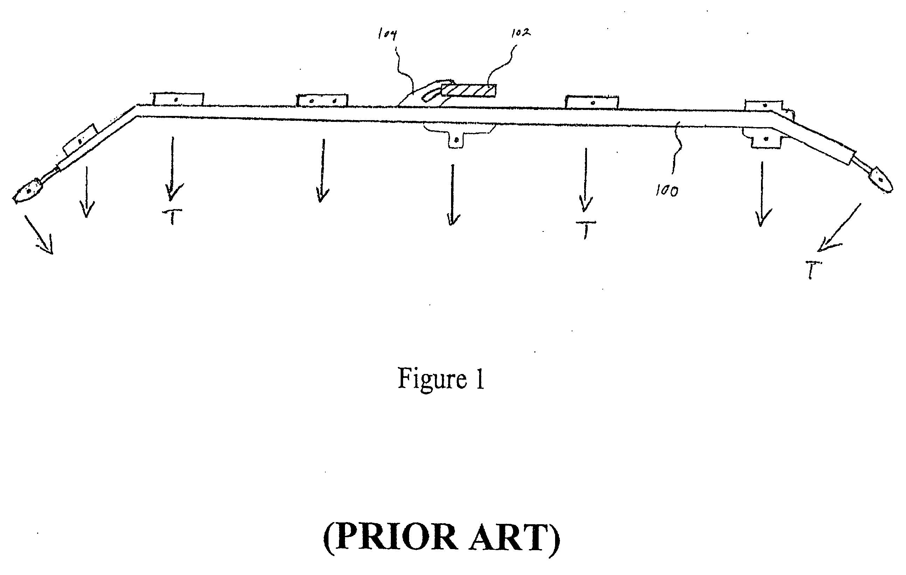

Figure 1 illustrates a side view of a side curtain type airbag. The airbag 100 is packaged for installation in a vehicle, such as in the side of a vehicle. An inflator 102 is used to provide inflating gas to the airbag 100 through a connecting tube 104 and cause the airbag 100 to inflate in the directions shown by arrows T.

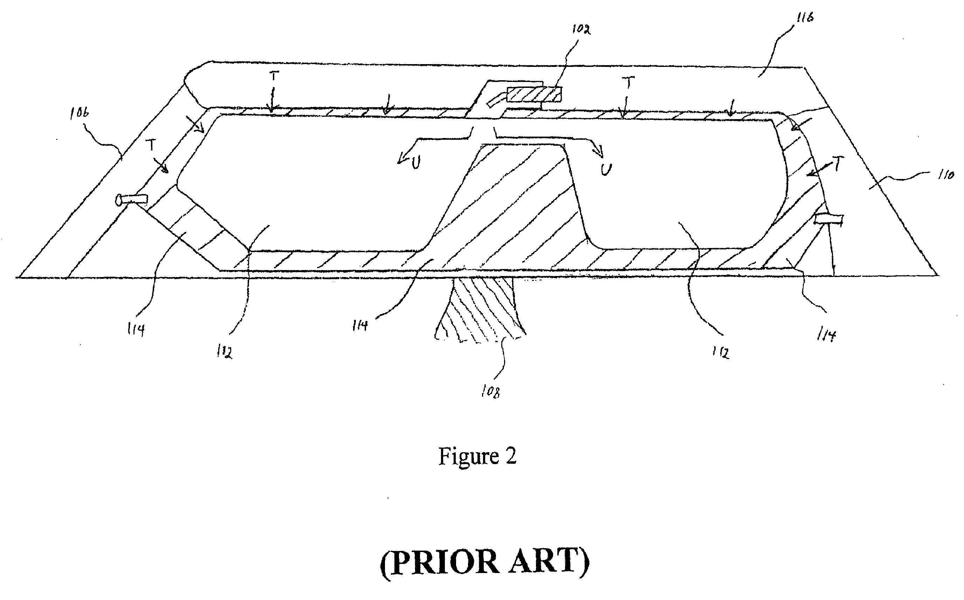

Figure 2 illustrates a side view of a side curtain type airbag that has been installed in the side of a vehicle and deployed. This airbag may also be referred to as a curtain or a head-side airbag (H-SAB). The airbag was installed in the headliner 116 of the vehicle so that it would deploy between a front pillar 106 and a rear pillar 110 while crossing a center pillar 108. Front pillar 106 is also known in the art as the "A" pillar, while center pillar 108 is known as the "B" pillar and rear pillar 110 is known as "C" pillar. The airbag has deployed in the direction shown by arrows T due to inflating gas moving in direction U. The airbag includes inflated chambers 112 and a non-inflated sail panel 114. Such airbags are conventionally used to protect passengers during a crash, particularly from head injuries and ejection during crashes and vehicle rollovers.

Conventional airbags mounted in the side of vehicles currently present problems. These airbags cause long lead times during vehicle assembly as the airbag is installed inside of the vehicle, such as, for example, in a roof portion of the vehicle. Conventional airbags are too thick for packaging inside of the side rail of a vehicle. If any part of the airbag is torn or caught on interior parts of the vehicle, full deployment of the airbag cannot be achieved to protect passengers during crashes or rollovers. The airbag may interact with interior parts, such as headliners, pillars, trims, and other upper interior parts to interfere with airbag deployment. Also, without a large gas tube that is long in length, the filling time of an airbag may take a substantial length of time.

An object of the present invention is to provide an airbag and non-inflatable curtain for installation in the side of a vehicle. More particularly, the airbag and non-inflatable curtain may be installed in a door of a vehicle to protect passengers from head injuries and to provide passenger containment during vehicle rollovers.

A particular object of the invention is to allow easy assembly and installation of airbags in vehicle production lines. For example, easy assembly and installation of the airbag or airbag module into a vehicle can be facilitated through installation of the airbag or airbag module into a door module, which is then attached to a vehicle on a production line. By first installing an airbag or airbag module into a door module, which is subsequently attached to a vehicle in a production line, manufacture of vehicles on a production line can be made more efficient and vehicles can be more easily assembled.

Another object of the invention is to provide fewer interactions between the airbag and vehicle upper interior parts during airbag deployment. Another object of an embodiment is to provide a stable deployment of high speed from the side of vehicles. Another object of an embodiment is to provide independent restraints for head protection and containment during side collisions and vehicle rollovers.

According to the present invention, these objects are achieved by an airbag apparatus as defined in claim 1, claim 17, claim 18 or claim 23. The dependent claims define preferred embodiments of the invention.

According to an embodiment, an airbag apparatus includes an airbag configured to deploy along a side of a vehicle cabin and a non-inflatable curtain configured to deploy between the airbag and the side of the vehicle cabin. The airbag may include a mechanism for deploying the non-inflatable curtain.

In an embodiment, the apparatus is arranged so that the airbag deploys upwardly and the non-inflatable curtain deploys downward from the roof of the vehicle.

According to one embodiment, the apparatus is arranged so that the airbag is positioned closer to the interior of the vehicle than the non-inflatable curtain. In a further embodiment, the non-inflatable curtain and airbag overlap one another.

In one embodiment, an airbag apparatus includes an airbag configured to deploy along a side of a vehicle cabin and a non-inflatable curtain configured to deploy along the side of the vehicle cabin, with the apparatus being arranged so that the airbag deploys upwardly and the non-inflatable curtain deploys from a roof of the vehicle.

In one embodiment, an airbag apparatus includes an airbag configured to deploy along a side of a vehicle cabin and a non-inflatable curtain configured to deploy along the side of the vehicle cabin, with the apparatus being arranged so that the airbag deploys upwardly.

In one embodiment, an airbag device includes an airbag configured to deploy along a side of a vehicle cabin and a non-inflatable curtain configured to deploy between the airbag and the side of the vehicle cabin, with the curtain being stored above the airbag prior to deployment.

The airbag may have a single chamber or have multiple chambers. Non-inflatable panels may be included in the airbag. The airbag may have one inflator or two or more inflators per airbag. An inflator may also be used to inflate more than one airbag. The airbag may be configured to fit between two adjacent pillars of a vehicle, such as the front pillar and center pillar. The airbag may be configured to cover a door or opening in a door, or to fit between the front and rear pillars of a vehicle so that the airbag spans the center pillar.

The airbag may be stored or installed in the side of a vehicle. For example, the airbag may be installed in a side door, trim, chassis, panel, or other side area of a vehicle. The non-inflatable curtain of the present invention may be stored or installed in the side of a vehicle. For example, the non-inflatable curtain may be installed in the roof, side door chassis, headliner, or other side area of a vehicle.

Inflators can include inflators using non-combustible gas or combustible gas and hybrid-type inflators that use a mix of combustible and non-combustible gas.

It is to be understood that both the foregoing general description and the following detailed description are exemplary and explanatory only and are not restrictive of the invention as claimed.

These and other features, aspects, and advantages will become apparent from the following description, appended claims, and the accompanying exemplary embodiments shown in the drawings, which are briefly described below.

Figure 1 is a side view of a side curtain airbag currently known in the art.

Figure 2 is a side view of the airbag of Figure 1 in a deployed condition.

Figure 3 is a side view of a deployed airbag and non-inflatable curtain, viewed from within the interior of a vehicle, according to an embodiment of the present invention.

Figure 4 is an exploded side view of the air bag shown in Figure 3.

Figure 5 is an exploded side view of the non-inflatable curtain shown in Figure 3.

Figure 6 is a side view of an airbag apparatus that includes an airbag and a non-inflatable curtain according to another embodiment of the present invention.

Figure 7 is side view of an airbag apparatus mounted in a front door and an airbag apparatus mounted in a rear door of a vehicle according to another embodiment of the present invention.

Figure 8 is a side view of the embodiment shown in Figure 7 with the airbags and non-inflatable curtains deployed.

Figure 9 is a sectional view, taken along line X-X in Figure 8.

Figure 10 is a perspective view of a mechanism for deploying a non-inflatable curtain according to another embodiment of the present invention.

Figure 11 is a perspective view of the mechanism shown in Figure 10 in an activated state.

Figure 12 is a perspective view of a mechanism for deploying a non-inflatable curtain according to another embodiment of the present invention.

Figure 13 is a side view of the mechanism shown in Figure 12.

Figure 14 is a perspective view of a mechanism for deploying a non-inflatable curtain according to another embodiment of the present invention.

Figure 15 is a perspective view of an airbag apparatus in which a wire is attached to the airbag according to another embodiment of the present invention.

Figure 16 is a side view of an airbag apparatus in which a wire is connected to the airbag and non-inflatable curtain according to another embodiment of the present invention.

Figure 17 is a side view of the embodiment shown in Figure 16 in a semi-deployed state.

Embodiments of the invention will be described in detail below with reference to the drawings.

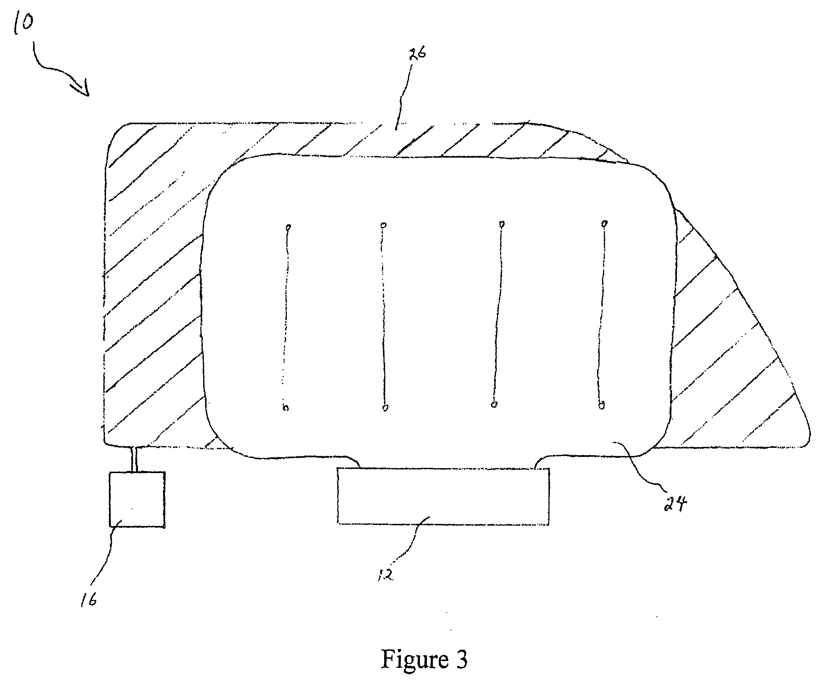

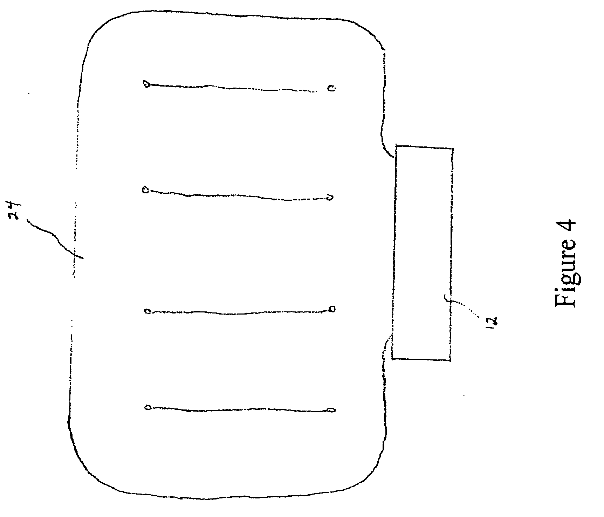

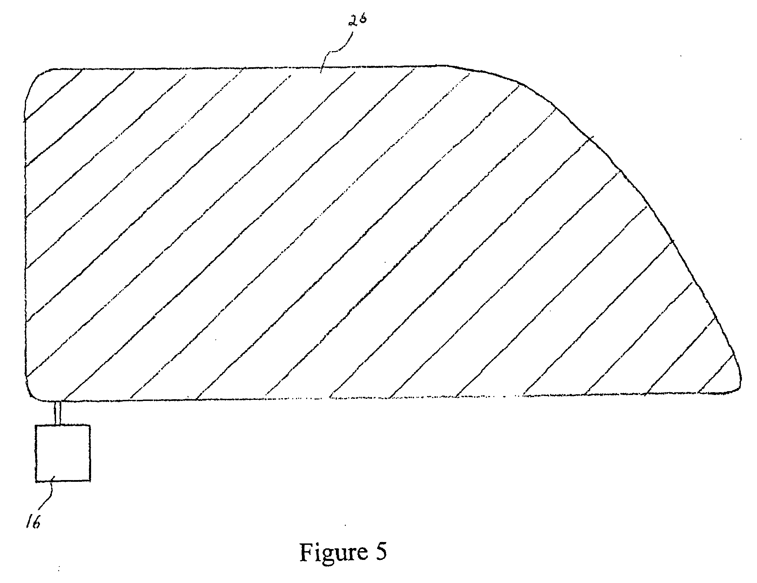

As shown in Figure 3, according to an embodiment, an airbag apparatus 10 includes an airbag 24 and a non-inflatable curtain 26. Figure 3 shows a side view of the apparatus from an interior of a vehicle. The airbag 24 may be deployed by an inflator 12 configured to provide inflation gas for the airbag. The non-inflatable curtain 26 may be deployed by a mechanism 16. Figure 4 shows an exploded view of the airbag apparatus of Figure 3 in which the airbag 24 is shown with the inflator 12. Figure 5 shows an exploded view of the airbag apparatus of Figure 3 in which the non-inflatable curtain 26 is shown with the mechanism 16.

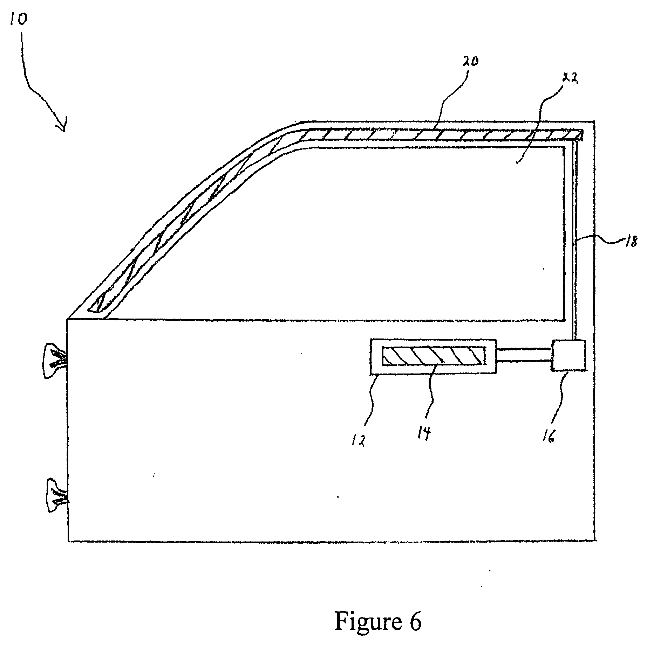

Figure 6 shows an embodiment in which an airbag apparatus 10 is installed in the side of a vehicle, particularly a door. The airbag 14 is shown in a stored or packaged state. An inflator 12 is used to provide inflating gas to the airbag. A non-inflatable curtain 20 is shown in a stored or packaged state. A mechanism 16 may be used to deploy the non-inflatable curtain. A wire 18 may be used to connect the mechanism 16 to the non-inflatable curtain. For example, the wire 18 may be used by the mechanism 16 to pull down the non-inflatable curtain 20. Wire may include a cord, thread, wire rope, string, rope, strip, ribbon, plate, sheet, or other connecting means known in the art.

In a further embodiment of an airbag apparatus, the mechanism 16 may be activated by the inflator 12. For example, the inflation gas provided by the inflator 12 may be used to activate the mechanism 16. In a further example, inflation gas provided by the inflator 12 may be used to activate the mechanism 16 for simultaneous deployment of the airbag 14, 24 and the non-inflatable curtain 20, 26. In a further embodiment, the non-inflatable curtain and airbag may be arranged to deploy between two adjacent pillars of the vehicle.

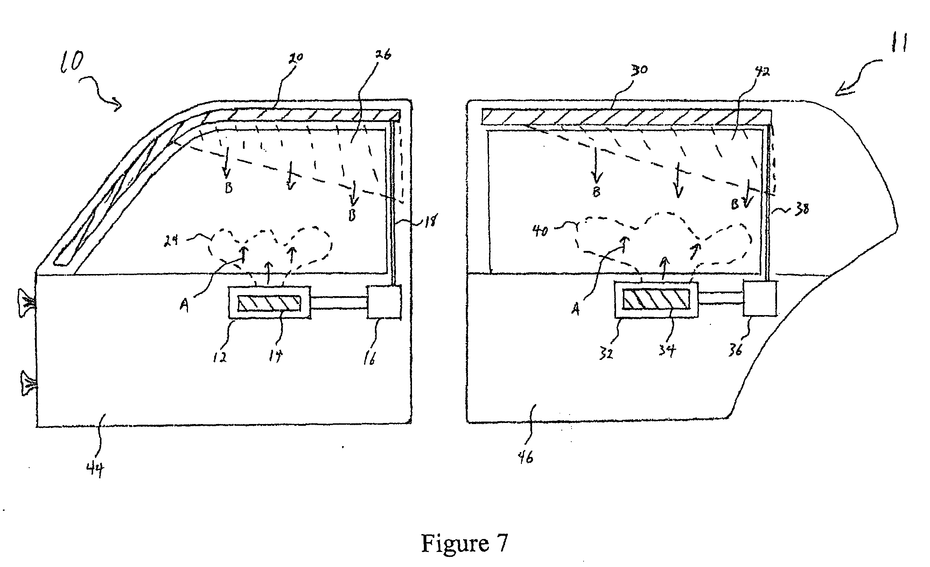

Figure 7 shows an embodiment of the invention in which an airbag apparatus 10 is installed in a front door 44 and another airbag apparatus 11 is installed in a rear door 46. Figure 7 shows the airbag apparatus 10 and the airbag apparatus 11 in semi-deployed states as airbags and non-inflatable curtains are being deployed. The stored or packaged airbags 14, 34 are illustrated with solid lines while the semi-deployed airbags 24, 40 are shown with dashed lines. The inflators 12, 32 provide inflation gas to cause the airbags 24, 40 to deploy. For example, the inflators may be used to deploy the airbags and inflation air in the direction indicated by arrows A. The stored or packaged non-inflatable curtains 20, 30 are shown with solid lines while the non-inflatable curtains 26, 42 in a semi-deployed state are shown with dashed lines. The mechanisms 16, 36 cause the non-inflatable curtains 26,42 to deploy. For example, the mechanisms may be used to deploy the non-inflatable curtains in the direction indicated by arrows B. In a further embodiment, the wire 18, 38 may connect the mechanism 16, 36 to a non-inflatable curtain.

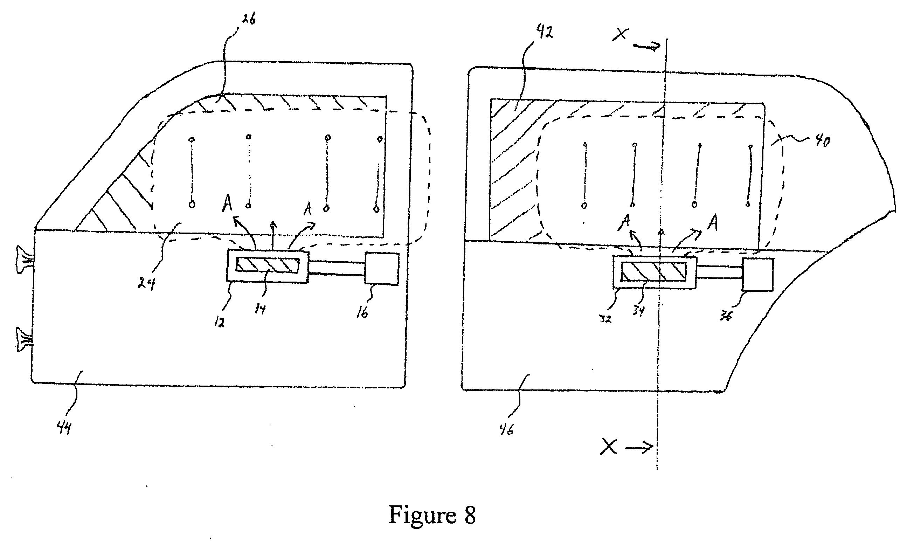

Figure 8 shows the embodiment of Figure 7 in a fully deployed state. Arrows A in Figure 8 indicate the flow of inflation air from the inflators 12, 32. The non-inflatable curtains 26, 42 and the airbags 24, 40 have fully deployed along the side of a vehicle. In a further embodiment, the non-inflatable curtains 26, 42 may be deployed along the side of a vehicle between the airbags 24,40 and the side of the vehicle cabin, with the non-inflatable curtains 20, 30 being stored above the airbags prior to deployment.

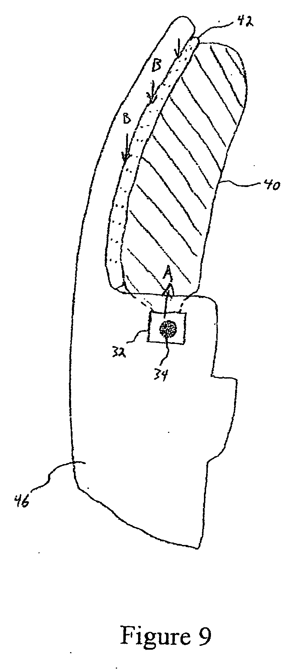

Figure 9 shows a sectional view of the airbag apparatus 11 in Figure 8 along line X-X. In an embodiment, the non-inflatable curtain 42 may be configured to deploy along the side of a vehicle cabin from the roof of a vehicle while the airbag 40 is arranged to deploy upwardly along the side of the vehicle cabin. In a further embodiment, the non-inflatable curtain 42 and the airbag 40 overlap. For example, the non-inflatable curtain 42 and the airbag 40 may be configured to deploy along the window 22 in a door so that the airbag 40 is closer to the interior of the vehicle than the non-inflatable curtain 42.

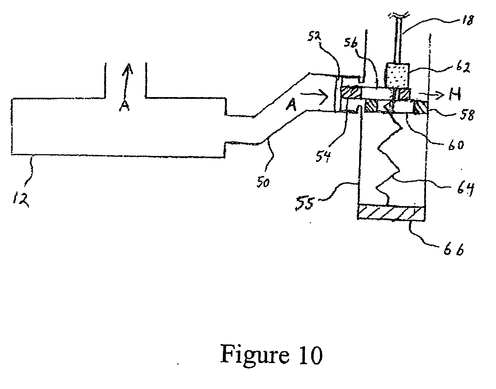

Figure 10 shows a further embodiment for the mechanism to deploy a non-inflatable curtain. In Figure 10 the mechanism is illustrated in a state of readiness. In this embodiment, inflation gas is released by the inflator 12 in the direction shown by arrows A to inflate an airbag (not shown) and to flow along a conduit 50 and contact a piston 52. The piston 52 is connected to a plate 54 that has an aperture 56. The plate 54 is configured to move along the direction show by arrow H within a tube 55. The plate 54 is also configured to move along direction H and over a plate 58, which has an aperture 60. A spring 64 is connected between the bottom 66 of the tube 55 and a stop 62 that is connected to the plate 54. The stop 62 is also connected to the wire 18 which is in turn connected to non-inflatable curtain (not shown). In the embodiment shown in Figure 10, the spring 64 is stretched and ready to coil upon movement of the plate 54 and release of the stop 62.

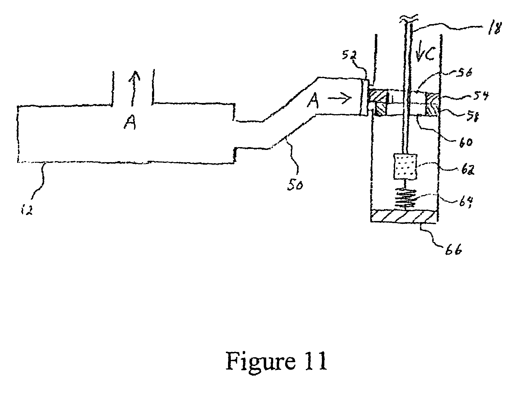

Figure 11 shows the embodiment of Figure 10 after the mechanism has been activated. Inflation gas from the inflator 12, moving in the direction of arrow A along the conduit 50, has exerted a force upon the piston 52. This in turn causes the plate 54 to move and the apertures 56 and 60 to align, releasing the stop 62. Once the stop 62 is released, the spring 64 is free to un-stretch and coil into its natural state, causing the wire 18 to pull the non-inflatable curtain.

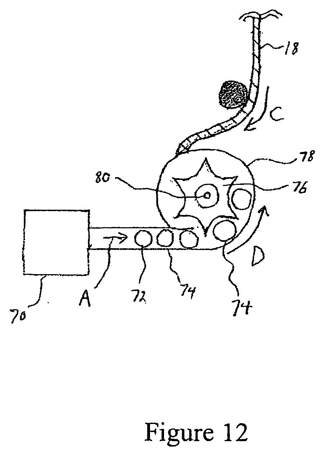

Figure 12 shows a further embodiment of the mechanism to deploy a non-inflatable curtain. In this embodiment, balls 74 are used to provide rotational movement to an axle 80. To accomplish this, the balls 74 are accelerated so that they contact and move a gear 76 located in the path of their movement. The gear 76 is connected to an axle 80 so that rotational movement of the gear 76 is transmitted to an axle 80. For example, an inflator 70 may be used to provide inflation gas in the direction indicated by arrow A. In this case, the first ball 72 contacted by inflation gas acts as a piston in a cylinder and causes the rest of the balls 74 to accelerate. A gear 76 is located within a casing 78 so that the balls 74 are kept in contact with the gear 76 as they move in the direction indicated by arrow D. For example, the balls 74 may cause a counter-clockwise rotation of the gear 76.

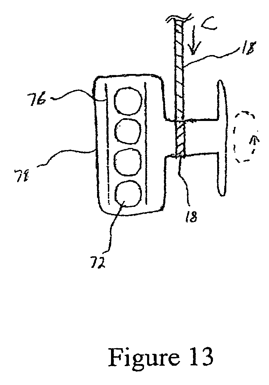

Figure 13 shows a side view of the embodiment shown in Figure 12. The axle 80 is connected to the wire 18, which is in turn connected to a non-inflatable curtain (not shown). When the gear 76 is rotated by movement of the balls 74, an axle 80 is also rotated. This rotation of the axle 80 pulls on the wire 18 and causes a non-inflatable curtain to deploy.

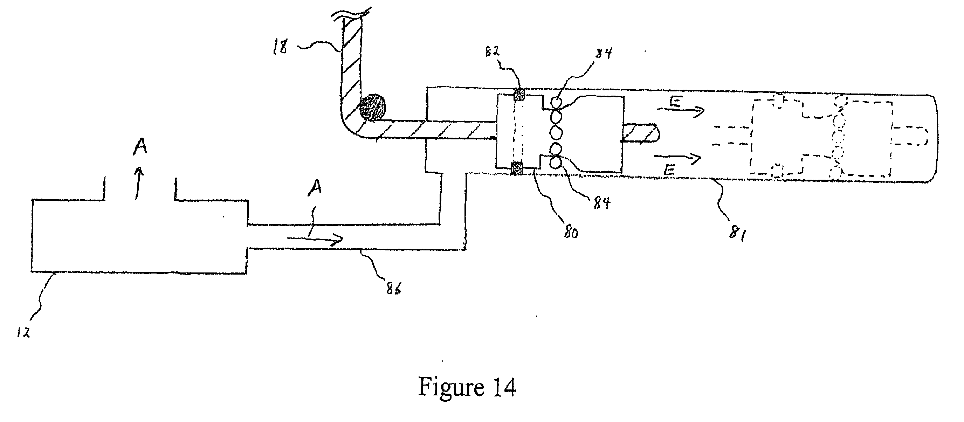

Figure 14 shows another embodiment of the mechanism to deploy a non-inflatable curtain. In this embodiment, the inflator 12 provides inflation gas that flows in the directions indicated by arrows A to an airbag (not shown) and along a conduit 86 to a piston 80 within a cylinder 81. The wire 18 is attached to the piston 80 and to a non-inflatable curtain (not shown). The piston 80 includes an O-ring 82 positioned around its circumference and annular balls 84 positioned around a portion of reduced cross-section in the piston 80. The annular balls 84 function as a brake for the piston 80 by moving along the portion of reduced cross-section until they wedge between the piston 80 and the sidewall of the cylinder 81. In Figure 14 solid lines are used to illustrate the piston 80 and the annular balls 84 in a state of readiness while dashed lines are used to illustrate the piston 80 and the annular balls 84 after the mechanism has been activated.

When the inflator 12 is activated, inflation gas moves in direction A along the conduit 86 and exerts a force upon the piston 80. This causes the piston 80 to move through the cylinder in the direction indicated by arrows E. Movement of the piston 80 in direction E causes the piston 80 to pull on the wire 18, causing the non-inflatable curtain to deploy.

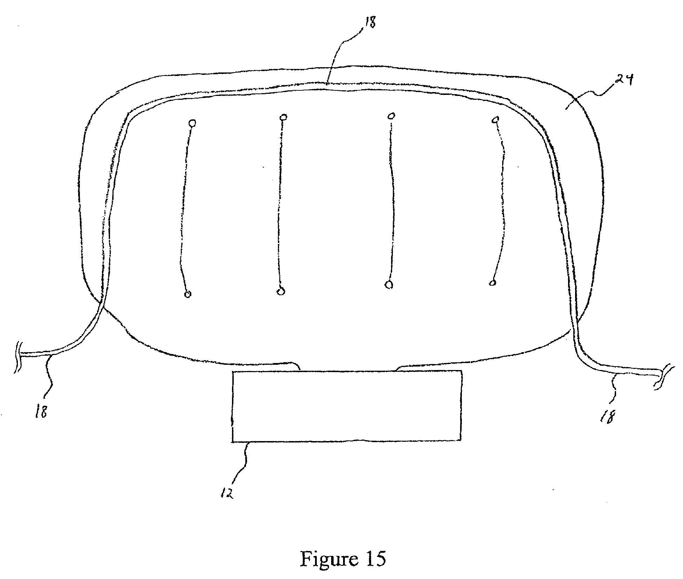

Figure 15 shows an embodiment in which the wire 18 is attached to the airbag 24. Figure 15 shows the airbag 24 in its deployed state.

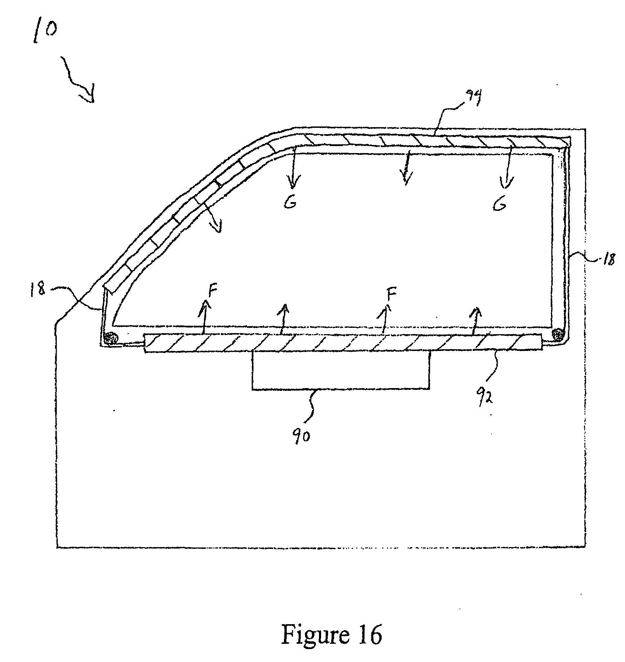

Figure 16 shows a further embodiment where the air bag apparatus 10 is installed in the side of a vehicle. In this embodiment the airbag shown in Figure 15 is stored or installed in the side of the vehicle as the airbag 92. An inflator 90 is configured to provide inflation gas to the airbag 92 and cause airbag to deploy in the direction indicated by arrows F. The wire 18, which is connected to the airbag 92, is in turn connected to the non-inflatable curtain 94. Arrows G indicate the direction that the non-inflatable curtain 94 is configured to deploy in.

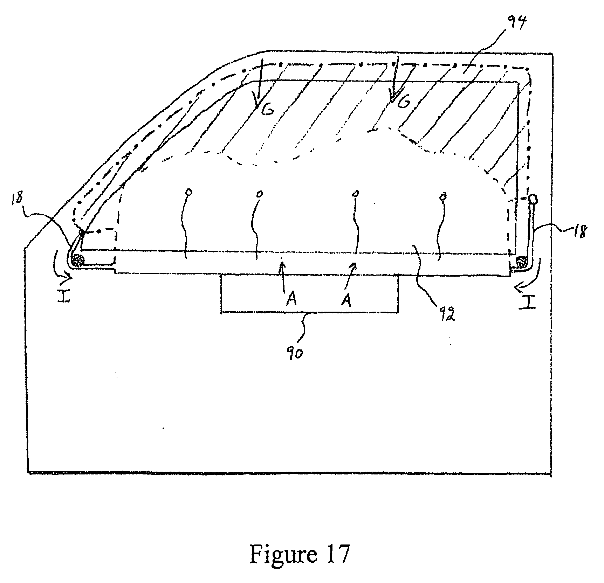

Figure 17 shows the embodiment of Figure 16 in a semi-deployed state as the airbag 92 and the non-inflatable curtain 94 are being deployed. The inflator 90 is provided inflation gas to the airbag 92 in the direction indicated by arrows A, causing airbag to deploy and inflate. Inflation of the airbag 94 causes the wire 18 to pull be pulled in the direction indicated by I. This in turn causes the non-inflatable curtain 94 to deploy in direction G. Therefore, as the airbag 94 deploys, the non-inflatable curtain 94 simultaneously deploys.

Given the present disclosure, one versed in the art would appreciate that there may be other embodiments and modifications within the scope and spirit of the invention. Accordingly, all modifications attainable by one versed in the art from the present disclosure within the scope and spirit of the present invention are to be included as further embodiments. The scope of the present invention is to be defined as set forth in the following claims.

## Claims

1. An airbag apparatus (10; 11), comprising:
an airbag (14; 24; 34; 40; 92) configured to deploy along a side of a vehicle cabin; and
a non-inflatable curtain (20; 26; 30; 42; 94) configured to deploy between the airbag (14; 24; 34; 40; 92) and the side of the vehicle cabin.

2. The airbag apparatus as claimed in claim 1, further comprising a mechanism (16; 36) for deploying the non-inflatable curtain (20; 26; 30; 42; 94).

3. The airbag apparatus as claimed in claim 2, wherein the mechanism (16; 36) is activated by an inflator (12; 32; 70; 90) configured to provide inflation gas for the airbag (14; 24; 34; 40; 92).

4. The airbag apparatus as claimed in claim 2 or claim 3, wherein the mechanism (16; 36) is connected to the non-inflatable curtain (20; 26; 30; 42; 94) by a wire (18; 38).

5. The airbag apparatus as claimed in any one of claims 2 - 4, wherein the mechanism (16; 36) includes a piston-cylinder actuator (52).

6. The airbag apparatus as claimed in claim 5, wherein the mechanism (16; 36) includes:
a spring (64);
a first plate (54) arranged within a tube (55), wherein the first plate (54) includes an aperture (56);
a stop (62) attached to the spring (64);
a second plate (58) connected to the piston-cylinder actuator (52), wherein the second plate (58) has an aperture (60) and the second plate (58) is arranged so that the second plate slides in relation to the first plate (54) so that the apertures (56, 60) of the first and second plates (54, 58) come into alignment and the stop (62) may pass through the apertures (56, 60); and
wherein the piston-cylinder actuator (52) is arranged to activate the spring (64) through movement of the second plate (58) when the piston-cylinder actuator (52) is activated.

7. The airbag apparatus as claimed in claim 5, further including:
a plurality of balls (74) positioned in the cylinder and configured to be moved by gas provided by the inflator (12; 32; 70; 90); and
a gear (78) that is arranged in a path of movement of the balls (74) so that the gear (78) rotates due to the movement of the balls (74).

8. The airbag apparatus as claimed in any one of claims 5 - 7, wherein the wire is connected to the piston (52) and the non-inflatable curtain (20; 26; 30; 42; 94).

9. The airbag apparatus as claimed in any one of claims 1 - 8, wherein the mechanism (16; 36) includes a wire (18; 38) that is connected to both the airbag (14; 24; 34; 40; 92) and to the non-inflatable curtain (20; 26; 30; 42; 94).

10. The airbag apparatus as claimed in claim 9, wherein the apparatus is arranged so that the non-inflatable curtain (20; 26; 30; 42; 94) moves in response to movement of the airbag (14; 24; 34; 40; 92).

11. The airbag apparatus as claimed in claim 9 or claim 10, wherein the wire (18; 38) passes through a one-way pulley.

12. The airbag apparatus as claimed in any one of claims 1 - 11, wherein the apparatus (10; 11) is arranged so that the airbag (14; 24; 34; 40; 92) deploys upwardly and the non-inflatable curtain (20; 26; 30; 42; 94) deploys downward from above the airbag (14; 24; 34; 40; 92).

13. The airbag apparatus as claimed in any one of claims 1 - 12, wherein the apparatus (10; 11) is arranged so that the airbag (14; 24; 34; 40; 92) is positioned closer to the interior of the vehicle than the non-inflatable curtain (20; 26; 30; 42; 94).

14. The airbag apparatus as claimed in any one of claims 1 - 13, wherein the non-inflatable curtain (20; 26; 30; 42; 94) and airbag (14; 24; 34; 40; 92) overlap one another.

15. The airbag apparatus as claimed in any one of claims 1 - 14, wherein the airbag (14; 24; 34; 40; 92) and non-inflatable curtain (20; 26; 30; 42; 94) are arranged between two pillars of the vehicle before deployment and after deployment.

16. The airbag apparatus as claimed in any one of claims 1 - 15, wherein the entire airbag apparatus (10; 11) is contained in a door module for a vehicle.

17. An airbag apparatus (10; 11), comprising:
an airbag (14; 24; 34; 40; 92) configured to deploy along a side of a vehicle cabin;
a non-inflatable curtain (20; 26; 30; 42; 94) configured to deploy along the side of the vehicle cabin; and
wherein the apparatus (10; 11) is arranged so that the airbag (14; 24; 34; 40; 92) deploys upwardly and the non-inflatable curtain (20; 26; 30; 42; 94) deploys from above the airbag.

18. An airbag apparatus (10; 11), comprising:
an airbag (14; 24; 34; 40; 92) configured to deploy along a side of a vehicle cabin;
a non-inflatable curtain (20; 26; 30; 42; 94) configured to deploy along the side of the vehicle cabin; and
wherein the apparatus (10; 11) is arranged so that the airbag (14; 24; 34; 40; 92) deploys upwardly.

19. The airbag apparatus as claimed in claim 17 or claim 18, wherein a mechanism (16; 36) for deploying the non-inflatable curtain (20; 26; 30; 42; 94) is activated by an inflator (12; 32; 70; 90) configured to provide inflation gas for the airbag (14; 24; 34; 40; 92).

20. The airbag apparatus as claimed in any one of claims 17 - 19, wherein the apparatus (10; 11) is arranged so that the airbag (14; 24; 34; 40; 92) is positioned closer to the interior of the vehicle than the non-inflatable curtain (20; 26; 30; 42; 94).

21. The airbag apparatus as claimed in any one of claims 17 - 20, wherein the airbag (14; 24; 34; 40; 92) and non-inflatable curtain (20; 26; 30; 42; 94) are arranged between two adjacent pillars of the vehicle before deployment and after deployment.

22. The airbag apparatus as claimed in any one of claims 17 - 21, wherein the entire airbag apparatus (10; 11) is contained in a door module for a vehicle.

23. An airbag device (10; 11) including an airbag (14; 24; 34; 40; 92) configured to deploy along a side of a vehicle cabin and a non-inflatable curtain (20; 26; 30; 42; 94) configured to deploy between the airbag (14; 24; 34; 40; 92) and the side of the vehicle cabin, wherein prior to deployment the curtain (20; 26; 30; 42; 94) is stored above the airbag (14; 24; 34; 40; 92).

24. The airbag apparatus (10; 11) as claimed in claim 23, wherein a mechanism (16; 36) for deploying the non-inflatable curtain (20; 26; 30; 42; 94) is activated by an airbag inflator (12; 32; 70; 90)configured to provide inflation gas for the airbag (14; 24; 34; 40; 92).
